# EUROPEAN PATENT APPLICATION

(11) **EP 4 850 518 A1**
(43) Date of publication of application: **09.12.2026**
(21) Application number: 26180603.8
(22) Date of filing: 22.05.2026
(51) Int. Cl.: A01D 43/08

(54) **HARVESTING MACHINE MONITORING**

(30) Priority: 02.06.2025 GB 202508600
(71) Applicant: AGCO International GmbH, 8212 Neuhausen am Rheinfall (CH)
(72) Inventor: Duering Jensen, Kenneth, DK-8930 Randers (DK); Christensen, Albert, DK-8930 Randers (DK)
(74) Representative: AGCO Intellectual Property Department

(57) **Abstract**

Systems and methods are provided for determining an operational condition for a cutting unit of a forage harvesting machine. Sensor data is received from a sensor operably coupled, in use, to the harvesting machine and having a sensing region which encompasses a crop flow through an unloading spout of the harvesting machine, the sensor data being indicative of a crop characteristic. Utilising the sensor data a crop processing metric is determined which, in turn, is used to determine a control action for the cutting unit. This control action, which may include the sharpening, replacement or other adjustment of cutting knives of the cutting unit, for example, may then be utilised to control operation of one or more operable components of or otherwise associated with the forage harvesting machine in accordance with the control action.

## Description

### CROSS-REFERENCE TO RELATED APPLICATIONS

Not applicable.

### FIELD

Embodiments of the present disclosure relate generally to systems and methods for monitoring operation of an agricultural harvesting machine, such as a forage harvester.

### BACKGROUND

Forage harvesting machines cut and collect forage crop growing in a working environment. In some instances, e.g. for grass or corn crops, the harvesting machine employs a cutting unit to chop or cut collected crop material into smaller crop components. Such cutting units often incorporate a series of cutting knives, for example, for performing this action. It is an aim of embodiments of the disclosure to monitor this operation.

### BRIEF SUMMARY

In an aspect of the invention there is provided a control system for determining an operational condition for a cutting unit of a forage harvesting machine, the control system comprising one or more controllers, and being configured to: receive sensor data from a sensor operably coupled, in use, to the harvesting machine and having a sensing region which encompasses a crop flow through an unloading spout of the harvesting machine, the sensor data being indicative of a crop characteristic; compute a crop processing metric in dependence on the sensor data; determine a control action for the cutting unit in dependence on the crop processing metric; and generate and output one or more control signals for controlling operation of one or more operable components of or otherwise associated with the forage harvesting machine in accordance with the determined control action.

Advantageously, the present solution utilises a sensor for imaging crop material following processing of that crop material by the cutting unit for directly monitoring a processing effect or quality of processing applied to the harvested crop material, in use. Based on this observed crop quality or processing metric, the solution described here provides one or more control actions for operable components of the harvesting machine, e.g. for informing an adjustment or maintenance action for the cutting unit, e.g. to improve future crop quality. Mounting the sensor in a position associated with the crop flow through the unloading spout advantageously positions the sensor downstream of the cutting unit, but also in a position where a relatively uniform and repeatable crop flow can be achieved, thereby allowing consistent monitoring of the operation of the harvesting machine.

The one or more controllers may collectively comprise an input (e.g. an electronic input) for receiving one or more input signals. The one or more input signals may comprise the sensor data. The one or more controllers may collectively comprise one or more processors (e.g. electronic processors) operable to execute computer readable instructions for controlling operation of the control system, for example, to compute the crop processing metric. The one or more processors may be operable to generate one or more control signals for controlling operation of the one or more operable components. The one or more controllers may collectively comprise an output (e.g. an electronic output) for outputting the one or more control signals.

The sensor may comprise an optical sensor. The sensor may comprise a camera. The one or more controllers may be configured to receive and analyse image data from the sensor for identifying crop material components within the image data. This may include the one or more controllers being configured to perform an object recognition process on image data received from the sensor for identifying individual crop material components within the image data, and optionally identifying the one or more crop characteristics therefrom. The one or more crop characteristics may include a measure of one or more dimensions of the identified crop material components. This may relate to a length, width, shape, surface area or estimate of a volume of the identified crop material components, for example.

The one or more controllers are configured to determine a crop processing metric in dependence on the identified or determined crop characteristic(s). This can include metric(s) based on individual identified crop material components, or more preferably a metric determined in dependence on multiple crop characteristics. This can include, for example, a metric which relates to an average crop material characteristic over time, or for multiple identified crop material components in a given image or set of images.

The crop processing metric may therefore comprise a measure of an average crop material characteristic, or a measure of a standard deviation or variance of a crop material characteristic over time or across an image or set of image data.

The crop processing metric may comprise a processing score for the crop material. This may be indicative of a level of processing applied to the crop material by the harvesting machine, or specifically by one or more components of a crop processing apparatus of the harvesting machine. The crop processing metric may relate to a level of processing to be applied by the harvesting machine. For instance, the computed crop processing metric incorporates information indicative a crop size or crop component size, which may relate directly to a digestibility of the crop material, for example, by livestock. Accordingly, where larger crop components are identified the crop processing metric may be indicative of a need to change (an operational setup of the cutting unit, e.g. to change a position of one or more knives of the cutting unit, a size of a cutting channel associated with the cutting unit and/or an operational speed of the cutting unit.

The crop processing metric may relate to a length of cut, or average length of cut of identified crop material pieces. Where there is an identifiable or relatively high variability in the length of cut observed across multiple crop material pieces, this may be indicative of a need for an adjustment in the operational setup of the cutting unit, e.g. a change in an operational position for one or more cutting components thereof, or an operational speed of the cutting unit, or may indicate a maintenance requirement for the cutting unit, which may include a replacement or sharpening of one or more cutting knives of the cutting unit.

The crop processing metric may comprise a metric indicative of a cut quality. This may include a measure of a uniformness or straightness of cut associated with crop material components. A non-uniformity of cut may be indicative of a poor cutting quality which may in turn indicate an operational efficiency or condition of the cutting unit or one or more components thereof. For example, this may include an operational condition relating to a sharpness or condition of one or more knives of the cutting unit. A (relatively) poor cut quality may additionally or alternatively indicate a need for an adjustment in the operational setup of the cutting unit, e.g. a change in an operational position for one or more cutting components thereof, or an operational speed of the cutting unit. In embodiments, the crop processing metric may indicate a maintenance requirement for the cutting unit, which may include a replacement or sharpening of one or more cutting knives of the cutting unit.

The one or more controllers may be configured to determine an operational condition associated with the cutting unit in dependence on the crop processing metric. The one or more controllers may be configured to determine the control action for the cutting unit in dependence on the operational condition.

The operational condition may comprise a condition or working state of one or more crop engaging components of the cutting unit. The one or more crop engaging components may comprise cutting knives of the cutting unit. For example, in some embodiments the operational condition may relate to a sharpness of the cutting knives. The one or more control actions may relate to a requirement or suggestion to sharpen or replace the cutting knives, for example.

The one or more control actions may relate to an operational setting for the cutting unit and/or one or more components thereof. For example, this may include an operational position and/or operational speed for the cutting unit and/or one or more components thereof. In such embodiments, the one or more controllers may be configured for controlling operation of the cutting unit and/or the cutting unit component(s) in accordance with the determined control action (e.g. through output of the control signal(s) thereto).

The operational position may correspond to an extent to which the cutting knives protrude into a cutting region of the harvesting machine, e.g. into a crop cutting or processing channel through the cutting unit. The operational position may correspond to a relative orientation of the cutting knives with respect to crop material to be processed by the cutting unit. The operational position of the cutting unit or component(s) may correspond to the relative position of a counterknife or the like with respect to one or more further components of the cutting unit. The operational speed of the cutting unit may comprise a rotational speed of a cutting drum of the cutting unit on which the cutting knives are mounted.

The one or more operable components may include one or more components upstream of the cutting unit. The one or more controllers may be configured for controlling operation of the upstream component(s) for controlling a feed speed of crop material to the cutting unit in dependence on the determined crop processing metric. In this way, the proposed system may utilise a cutting quality as determined by the controller(s) for increasing or decreasing a feed speed of material to the cutting unit for improving cutting quality. The upstream component(s) may include a processing apparatus, a header or other intake for the harvesting machine, or an accelerator unit. The operation of such components may be advantageously controlled to control the speed at which crop flows through the machine and hence the feed speed to the cutting unit.

The one or more operable components may comprise a drive unit for the harvesting machine. The one or more controllers may be configured for controlling a forward speed of the harvesting machine in dependence on the crop processing metric. Similarly, such control may impact a feed speed or feed rate of material to the cutting unit.

The one or more operable components may include a user interface. The user interface may, for example, comprise a display terminal of the harvesting machine. The user interface may comprise a user device, such as a smartphone or tablet computer, for example. The one or more controllers may be configured to control operation of the user interface, e.g. by controlling display of a graphical representation thereon indicative of the computed crop processing metric and/or the associated control action for the cutting unit.

In an at least partly automated system, the graphical representation may be provided for information purposes to inform an operator of the machine of automated adjustments made, for example, to the cutting unit operation. In other embodiments the one or more controllers may be configured to provide one or more instructions or suggested adjustments to operational setting(s) associated with the harvesting machine and/or components thereof. This may include suggested adjustments to the cutting unit operation, or a suggestion for performance of a maintenance action for the cutting unit, e.g. replacement or sharpening of the cutting knives of the cutting unit. The suggestion may advantageously provide an operator with an indication of potential efficiency or quality improvements which may be obtained through performance of the determined control action.

In some embodiments, the cutting unit may be provided with a knife sharpening apparatus, e.g. for sharpening the cutting knives "onboard". This may include the provision of a grinding stone or the like, moveably mounted with respect to the cutting knives of the cutting unit. In use, the grinding stone may be moved to a position in which the knives are brought into contact with a grinding surface thereof for causing sharpening of the knives via friction. The one or more control actions may comprise performance of a knife sharpening process (e.g. movement of a grinding stone to a sharpening position) through suitable instruction/control of the knife sharpening apparatus.

A further aspect provides an agricultural harvesting machine comprising the control system according to any preceding aspect described herein. The agricultural harvesting machine may optionally comprise a forage harvester.

A further aspect provides a method of determining an operational condition for a cutting unit of a forage harvesting machine, comprising: receiving sensor data from a sensor operably coupled, in use, to the harvesting machine and having a sensing region which encompasses a crop flow through an unloading spout of the harvesting machine, the sensor data being indicative of a crop characteristic; computing a crop processing metric in dependence on the sensor data; determining a control action for the cutting unit in dependence on the crop processing metric; and controlling operation of one or more operable components of or otherwise associated with the forage harvesting machine in accordance with the determined control action.

The method may comprise performing any one or more of the functionalities of the control system described hereinabove.

A further aspect of the invention provides computer software comprising computer readable instructions which, when executed by one or more electronic processors, causes performance of a method in accordance with any aspect described herein.

A yet further aspect of the invention provides a computer readable medium having the computer software of the preceding aspect of the invention stored thereon.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
FIG. 1 is a simplified cross-sectional side view illustrating an agricultural harvesting machine embodying aspects of the present disclosure;
FIG. 2 is an image illustrating the operational use of aspects of the present disclosure; and
FIG. 3 is a schematic diagram of a control system of the present disclosure.

### DETAILED DESCRIPTION

The present disclosure relates to a control system 100 and associated method for controlling operation of an agricultural harvesting machine, here in the form of a forage harvester 2. A sensor 25 (here in the form of a camera 25) is operably coupled, in use, to the forage harvester 2, specifically here within or adjacent to a crop flow through an unloading spout 22 of the harvester 2. The sensor 25 is configured to obtain second sensor data which is indicative of a crop characteristic. As discussed herein, the crop characteristic may relate to, for example, a length of cut or quality or uniformness of cut of the crop material components present in the sensor data. In the illustrated embodiment, the sensor comprises an optical sensor, specifically a camera, within the unloading spout 22 and is operable to obtain image data of crop material passing therethrough. As discussed herein, a crop processing metric is computed in dependence on the sensor data, the processing metric relating to a cut quality or uniformness of cut crop material processed by the forage harvester 2 and specifically by the cutting unit 12 thereof. From this, a control action for the cutting unit 12 is determined which may relate to a suggested adjustment in the cutting unit's operation, or a maintenance requirement for one or more crop engaging components thereof (e.g. cutting knives thereof). Operation of one or more operable components of or otherwise associated with the forage harvester 2 can be controlled in accordance with the determined control action, e.g. utilising a user interface (e.g. display terminal 28 of the forage harvester 2) to display a graphical representation of the crop processing metric or determined control action, or to at least partly automate adjustments to the forage harvester operation, as discussed in detail herein.

### Harvester

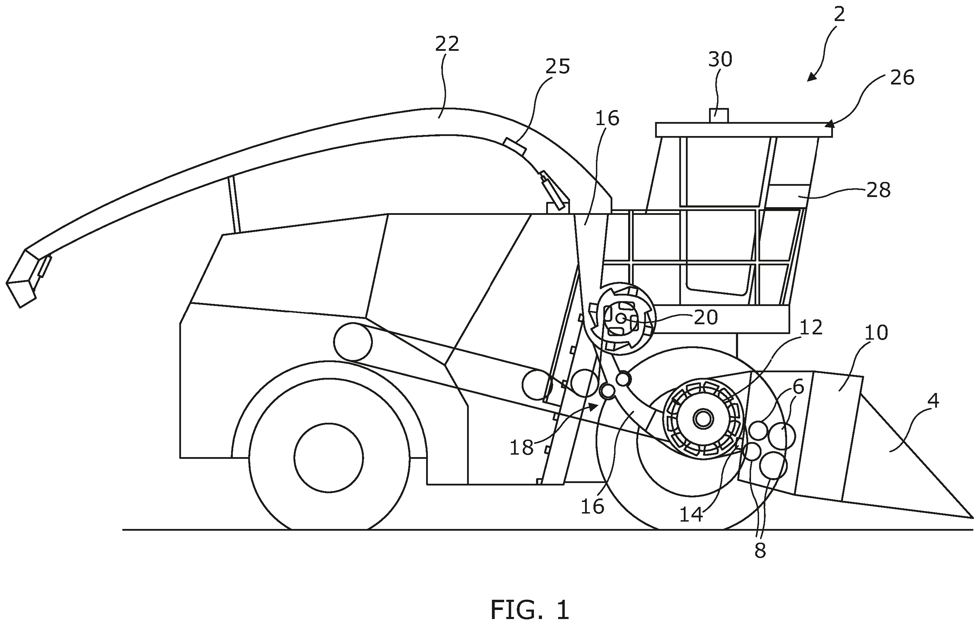

FIG 1 illustrates an agricultural harvesting machine in the form of a forage harvester 2. The forage harvester 2 is provided with a front attachment, here a header 4 comprising cutting equipment for cutting and harvesting a crop from a working environment. The cut crop is fed from the header 4 via associated feed rollers 6, 8 in a housing 10 to a cutting unit in the form of a chopper drum 12 where the crop is chopped into smaller pieces between the chopper drum 12, or more specifically between one or more crop engaging components of the chopper drum (e.g. cutting knives thereof), and an associated shear bar or counterknife 14. The chopped crop passes through a duct 16 and is optionally directed into a cracker unit 18 where the crop is further crushed and threshed. The chopper drum 12, shear bar 14, cracker unit 18 and other associated components may herein be referred to collectively as the crop processing apparatus of the forage harvester 2. The harvested crop is then blown upwards along the duct 16 by an accelerator 20 and exits through a spout 22 directing the processed crop into a trailer or other vehicle moving alongside the forage harvester 2, as will be appreciated.

The forage harvester 2 is further provided with an operator's cab 26. A user interface in the form of a display terminal 28 is located within the operator's cab 26 to communicate information to the operator regarding the operation of the forage harvester 2, and specifically under control of the control system 100 in the manner discussed herein for communicating information to the operator regarding the operational state of the control system 100, the crop processing apparatus, etc. In alternative embodiments, the user interface may instead be provided on a portable electronic device carried by the operator, such as a smart phone or tablet computer utilising application software stored or otherwise accessible by the remote user device.

### Operational Use

As discussed herein, the present disclosure utilises sensor data from the camera 25 for determining a crop processing metric indicative of a cut quality or uniformness of cut applied by the forage harvester 2, and more particularly the cutting unit of the harvester 2. Advantageously, the camera 25 is coupled, in use, to the forage harvester 2 downstream of the cutting unit and at or proximal to a crop flow associated with the harvester 2. In this specific example, the imaging region of the camera 25 encompasses a crop flow in the discharge spout 22 of the forage harvester 2.

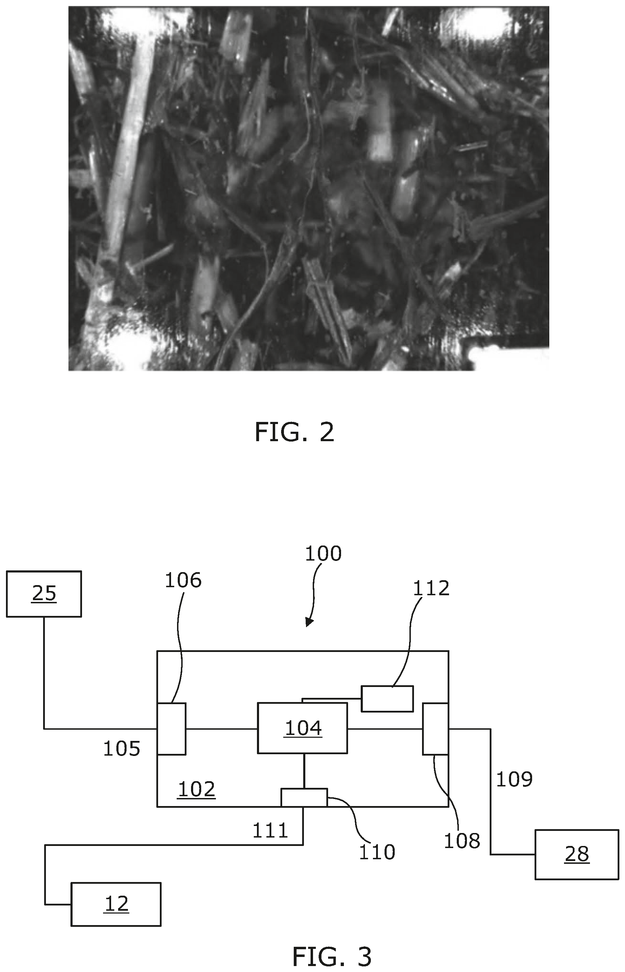

The control system 100 (see below) and specifically the controller 102 thereof is configured to receive and analyse image data from the camera 25 to identify crop material components within the image data. This includes performance of an object recognition process on image data received from the camera 25 for identifying individual crop material components within the image data and identifying one or more crop characteristics thereof. This is illustrated figuratively in FIG. 2, where the one or more characteristics may include a measure of a length of the individually identified crop material components, or a measure of uniformness of one or more cut ends of the identified crop material pieces.

A length of cut of identified material pieces may be indicative of the performance of the cutting unit - e.g. is it performing/cutting at an expected or desired level to produce cut crop material with an acceptable, accounting for the intended use of the crop material. In practice, the controller 102 is configured to compare the determined crop size measures (here the length of individual crop material pieces as identified from the image data from the camera 25) with a target size parameter. This target may be set at an appropriate level or be adjusted by an operator of the harvester 2, for example. The proportion of material above or below the target length, or outside of a threshold range may be defined as a crop processing metric. Alternatively, an average cut length, or a deviation/variability of identified crop material either side of an expected or target cut length may be defined as the crop processing metric. If this metric is determined to fall outside of a control measure, it may be determined that one or more control actions are necessary to improve the cut quality obtained by the cutting unit.

In an extension, the crop processing metric may include a measure of a uniformness or straightness of cut associated with identified crop material components. As discussed herein, a non-uniformity of cut may be indicative of a poor cutting quality which may in turn indicate an operational efficiency or condition of the cutting unit or one or more components thereof. For example, this may include an operational condition relating to a sharpness or condition of one or more knives of the cutting unit. Straightness or uniformness of cut may be determined through analysis of the variation in the cut end surfaces of the identified crop material components, e.g. through identification of step changes in the cut ends, or other anomalous cut regions.

Appropriate control actions are discussed in detail, herein. Specifically, the crop processing metric is advantageously used herein to determine control actions ultimately implemented by one or more operable components of the forage harvester 2.

Control actions may relate to an operational setting for the cutting unit and/or one or more components thereof, which may include cutting knives position or orientation on the chopper drum 12. The operational position of the cutting unit or component(s) may correspond to the relative position of a counterknife or shearbar, for example, with respect to one or more further components of the cutting unit. Control actions may additionally or alternatively advantageously include an operational speed for the cutting unit, e.g. a rotational speed of the chopper drum 12.

The one or more operable components may additionally include one or more components upstream of the cutting unit, with the operation of said upstream component(s) advantageously controlling a feed speed or feed rate of crop material to the cutting unit. In this way, the proposed system may utilise a cutting quality as determined by the controller(s) for increasing or decreasing a feed speed or feed rate of material to the cutting unit for improving cutting quality. The upstream component(s) may include a processing apparatus, such as the feeder rollers 6, header 4 or components of the header. Further, a forward speed of the forage harvester 2 may advantageously be controlled based on the crop processing metric again for impacting a feed speed or feed rate of material to the cutting unit.

Further, the one or more operable components also include a user interface, specifically here a display terminal 28 provided within the forage harvester 2. The display terminal 28 is used here to display a graphical representation thereon indicative of the computed crop processing metric and/or the suggested or automated control actions for the operable components. In an extension of this, for instance in an at least partly automated system, the graphical representation may be provided for information purposes to inform an operator of the harvester 2 of automated adjustments made, for example, to the cutting unit or components thereof of the harvester 2 as discussed above. The display terminal 28 may provide one or more instructions or suggested adjustments to operational setting(s) associated with the harvester 2 and/or components thereof for manual control of those components in accordance with the determined control actions. This may extend to providing a suggestion for performance of a maintenance action for the cutting unit, e.g. replacement or sharpening of the cutting knives of the cutting unit, which may be performed manually.

Further operable components and suitable adjustments thereof are also within the scope of the present disclosure, as will be appreciated, and as is discussed herein. For example, the cutting unit can be provided with a knife sharpening apparatus, e.g. for sharpening the cutting knives "onboard". The knife sharpening apparatus may provide a moveable grinding stone or the like, moveably mounted with respect to the cutting knives of the cutting unit. In use, the grinding stone may be moved to a position in which the knives are brought into contact with a grinding surface thereof for causing sharpening of the knives via friction. Poor cutting quality, e.g. as determined by the crop processing metric, determined in the manner discussed herein, may be improved through sharpening of the cutting knives in this way.

### Control System

FIG 3 illustrates an embodiment of a control system 100 of the present disclosure. As discussed herein, the control system 100 comprises a controller 102 operably connected to camera 25. The control system 100 is configured for controlling one or more operable components 28, 12 associated with the harvester 2 in the manner discussed herein. In the illustrated embodiment, the controllable operable components include the cutting unit 12 of the harvester 2 for controlling the chopping of cut crop material, as is discussed herein, and a user interface 28 associated with the harvester 2, which as discussed is provided as a display terminal 28 in the operator cab 26 of the harvester 2 to provide a graphical representation illustrative of the operation of the control system 100, again as discussed herein.

Control system 100 comprises a controller 102 having an electronic processor 104, an electronic input 106 and electronic outputs 108, 110. The processor 104 is operable to access a memory 112 of the controller 102 and execute instructions stored therein to perform the steps and functionality of the present disclosure discussed herein, e.g. by controlling the display terminal 28 to provide the graphical representation, and/or controlling operation of operable components, e.g. cutting unit 12.

The processor 104 is operable to receive image data from the camera 25 via electronic input 106, here in the form of input signals 105 from the camera 25. As discussed, the sensor data from the camera 25 provides information relating to the processed crop material, analysed in the manner discussed herein for identifying crop material components and one or more characteristics thereof.

The processor 104 is configured to analyse the data from the camera 25 and determine therefrom any necessary adjustment in the operational state of one or more operable components of or otherwise associated with the harvester 2, e.g. the cutting unit 12 (or components thereof) in dependence on the observed cut quality, as inferred through the computed crop processing metric determined in the manner discussed hereinabove. Additionally or alternatively this can include determining of a necessary maintenance action, e.g. replacement of one or more cutting knives of the cutting unit 12.

Controller 102 includes an electronic output 110 configured to output control signals 111 generated by the processor 104 for controlling operation of the cutting unit. Specifically, processor 104 is operable to generate, and the controller 102 operable to then output via output 1110, control signals 111 to the cutting unit 12 or a local control unit thereof for controlling operable components thereof, specifically here an operational position of the cutting unit, e.g. position of the cutting knives with respect to a counterknife or shear bar of the cutting unit, and/or an operational speed of the cutting unit 12 (e.g. a rotational speed of the chopper drum 12).

Output 108 is operably coupled to the display terminal 28. Control system 100 is operable to control operation of the display terminal 28 e.g. through output of control signals 109 in order to display data to an operator of the harvester 2 relating to the operation of the control system 100. Specifically, the control system 100 is operable to control the display terminal 28 to display to the operator a representation of crop processing metric or the determined control action to an operator of the harvester 2. This may be used, for example, by an operator of the harvester 2 to make additional manual adjustments to the harvester settings, or for providing a recommendation to the operator to perform a required maintenance action - e.g. replacement of one or more cutting knives or performance of a sharpening process for the knives.

### General

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

All references cited herein are incorporated herein in their entireties. If there is a conflict between definitions herein and in an incorporated reference, the definition herein shall control.

## Claims

1. A control system for determining an operational condition for a cutting unit of a forage harvesting machine, the control system comprising one or more controllers, and being configured to:
receive sensor data from a sensor operably coupled, in use, to the harvesting machine and having a sensing region which encompasses a crop flow through an unloading spout of the harvesting machine, the sensor data being indicative of a crop characteristic;
compute a crop processing metric in dependence on the sensor data;
determine a control action for the cutting unit in dependence on the crop processing metric; and
generate and output one or more control signals for controlling operation of one or more operable components of or otherwise associated with the forage harvesting machine in accordance with the determined control action;
wherein the one or more controllers are configured to determine an operational condition associated with the cutting unit in dependence on the crop processing metric, and determine the control action for the cutting unit in dependence on the operational condition; and
wherein the operational condition comprises a condition or working state of one or more crop engaging components of the cutting unit, including a sharpness of the cutting knives.

2. A control system of claim 1, wherein the one or more control actions relate to a requirement or suggestion to sharpen or replace the cutting knives.

3. A control system of claim 1 or claim 2, wherein the sensor comprises an optical sensor; and wherein the one or more controllers are configured to receive and analyse image data from the optical sensor for identifying crop material components within the image data.

4. A control system of claim 1 or claim 2, wherein the one or more controllers are configured to perform an object recognition process on image data received from the sensor for identifying individual crop material components within the image data, and identifying the one or more crop characteristics therefrom.

5. A control system of any preceding claim, wherein the one or more crop characteristics include a measure of one or more dimensions of the identified crop material components, including one or more of a length, width, shape, surface area or estimate of a volume of the identified crop material components.

6. A control system of any preceding claim, wherein the one or more controllers are configured to determine a crop processing metric in dependence on the identified or determined crop characteristic(s); optionally wherein the crop processing metric comprises a measure of an average crop material characteristic, or a measure of a standard deviation or variance of a crop material characteristic over time or across an image or set of image data.

7. A control system of claim 6, wherein the crop processing metric relates to a length of cut, or average length of cut of identified crop material pieces.

8. A control system of claim 6 or claim 7, wherein the crop processing metric comprises a metric indicative of a cut quality, including a measure of a uniformness or straightness of cut associated with crop material components.

9. A control system of any preceding claim, wherein the one or more control actions relate to an operational setting for the cutting unit and/or one or more components thereof, including an operational position and/or operational speed for the cutting unit and/or one or more components thereof.

10. A control system of any preceding claim, wherein the one or more operable components include one or more components upstream of the cutting unit; and wherein the one or more controllers are configured for controlling operation of the upstream component(s) for controlling a feed speed or feed rate of crop material to the cutting unit in dependence on the determined crop processing metric.

11. A control system of any preceding claim, wherein the one or more operable components comprise a drive unit for the harvesting machine; and wherein the one or more controllers are configured for controlling a forward speed of the harvesting machine in dependence on the crop processing metric.

12. A control system of any preceding claim, wherein the one or more operable components include a user interface; and wherein the one or more controllers are configured to control operation of the user interface by controlling display of a graphical representation thereon indicative of the computed crop processing metric and/or the associated control action for the cutting unit.

13. A control system of any preceding claim, wherein the cutting unit is provided with a knife sharpening apparatus for sharpening the cutting knives of the cutting unit; and wherein the one or more control actions comprise performance of a knife sharpening process through control of the knife sharpening apparatus by the one or more controllers.

14. An agricultural harvesting machine comprising the control system according to any preceding claim.

15. A method of determining an operational condition for a cutting unit of a forage harvesting machine, comprising:
receiving sensor data from a sensor operably coupled, in use, to the harvesting machine and having a sensing region which encompasses a crop flow through an unloading spout of the harvesting machine, the sensor data being indicative of a crop characteristic;
computing a crop processing metric in dependence on the sensor data;
determining a control action for the cutting unit in dependence on the crop processing metric; and
controlling operation of one or more operable components of or otherwise associated with the forage harvesting machine in accordance with the determined control action;
wherein the method comprises determining an operational condition associated with the cutting unit in dependence on the crop processing metric, and determining the control action for the cutting unit in dependence on the operational condition; and
wherein the operational condition comprises a condition or working state of one or more crop engaging components of the cutting unit, including a sharpness of the cutting knives.
